Europäisches Patentamt

European Patent Office

Office européen des brevets

(19)

(11) Veröffentlichungsnummer: **0 083 771**
**B1**

(12)

# EUROPÄISCHE PATENTSCHRIFT

(45) Veröffentlichungstag der Patentschrift:
09.04.86

(21) Anmeldenummer: 82111777.7

(22) Anmeldetag: 18.12.82

(51) Int. Cl.⁴: **G 01 L 17/00**, B 60 C 23/04

(54) Prüfvorrichtung für den Reifenluftdruck von Rädern an Fahrzeugen.

(30) Priorität: 24.12.81 DE 3151254

(43) Veröffentlichungstag der Anmeldung:
20.07.83 Patentblatt 83/29

(45) Bekanntmachung des Hinweises auf die Patenterteilung:
09.04.86 Patentblatt 86/15

(84) Benannte Vertragsstaaten:
FR GB IT SE

(56) Entgegenhaltungen:
DE - A - 2 713 451
DE - B - 2 461 212

(73) Patentinhaber: BAYERISCHE MOTOREN WERKE
Aktiengesellschaft, Postfach 40 02 40 Petuelring 130,
D-8000 München 40 (DE)

(72) Erfinder: Gabler, Eugen, Am Blütenanger 47a,
D-8000 München 50 (DE)

(74) Vertreter: Bullwein, Fritz, Bayerische Motoren Werke
Aktiengesellschaft
Postfach 40 02 40 Petuelring 130 AJ-33,
D-8000 München 40 (DE)

LIBER, STOCKHOLM 1986

## Beschreibung

Die Erfindung bezieht sich auf eine Prüfvorrichtung für den Reifenluftdruck von Rädern an Fahrzeugen, mit individuellen Prüfeinrichtungen für jedes Rad.

Bei üblichen derartigen Prüfvorrichtungen wie z.B. gemäß der DE-B-2461212, sind die Prüfeinrichtungen an jedem Rad angeordnet. Dabei ist die Gefahr von Beschädigungen der Prüfeinrichtungen hoch. Ferner ist häufig die Montage des Reifens erschwert. Ferner treten aufgrund des zusätzlichen Platzbedarfs für die Prüfeinrichtungen, insbesondere an den Vorderrädern, Einbauprobleme auf, da der dort zur Verfügung stehende Raum durch Bremsen- und Fahrwerksteile weitgehend ausgefüllt ist.

Der Erfindung liegt die Aufgabe zugrunde, eine Prüfvorrichtung der eingangs genannten Art zu schaffen, die eine exakte Bestimmung des Reifenluftdrucks aller Räder des Fahrzeugs ermöglicht und die wesentlich einfach unterzubringen ist. Die Erfindung löst diese Aufgabe gemäß dem kennzeichnenden Teils des Anspruchs 1.

Mit Hilfe der Prüfeinrichtungen ist eine raletive Bestimmung des Reifenluftdrucks der Räder möglich. Die Eicheinrichtung ermöglicht eine Aussage darüber, inwieweit Abweichungen dieser relativen Reifenluftdruckwerte von einem Sollwert oder einem Sollverhalten tolerierbar sind.

Durch die Erfindung wird der Platzbedarf der Vorrichtung insgesamt, insbesondere an den kritischen Stellen in der Nähe der Räder, erheblich verringert, da lediglich die Eicheinrichtung in diesem Bereich angeordnet werden muß. Die Prüfeinrichtungen können außerhalb dieses Bereichs untergebracht werden.

Infolge der Funktion der Eicheinrichtung, einen Maßstab oder Ausgangspunkt für die Relativbestimmung des Reifenluftdrucks der Räder zu liefern, spielt es keine Rolle, an welchem der Räder die Eicheinrichtung angeordnet ist. Da gerade im Bereich der Vorderräder nur wenig Platz zur Verfügung steht, kann die Eicheinrichtung ohne weiteres an einem Hinterrad angeordnet werden.

Die indirekte Bestimmung des Reifenluftdrucks der Räder mit Hilfe der Prüfeinrichtungen kann in unterschiedlicher Weise erfolgen. So ist es möglich, die Ausgangssignale jeder der Prüfeinrichtungen mit gespeicherten Sollwerten einzeln zu vergleichen. Demgegenüber kommt man ohne derartige Speichereinrichtungen aus, wenn die Ausgangssignale der Prüfeinrichtungen miteinander verglichen werden. Dabei bietet sich an, für jedes Rad die Ausgangssignale der Prüfeinrichtungen des anderen Rads derselben Achse und des Rads auf der gleichen Fahrzeugseite zu vergleichen. Damit lassen sich Einflüsse auf die Ausgangssignale der Prüfeinrichtungen, die auf Änderungen oder Einseitigkeit der Beladung des Fahrzeugs oder auch unterschiedliche Einflüsse infolge äußerer Einwirkungen, wie beispielsweise Sonnenbestrahlung, zurückzuführen sind, ohne weiteres eliminieren.

Für einen derartigen Vergleich können Prüfeinrichtungen verwendet werden, die auf unterschiedlichen Arbeitsprinzipien beruhen. So können beispielsweise Beschleunigungsgeber als Prüfeinrichtungen verwendet werden, mit deren Hilfe die Beschleunigung der Aufhängungsteile bestimmt werden. Alternativ hierzu können auch Abstandsgeber verwendet werden, mit denen der Abstand der Aufhängungsteile von der Fahrbahnoberfläche bestimmt wird. In beiden Fällen sind die Ausgangssignale der Prüfeinrichtungen abhängig vom Reifenluftdruck des zugehörigen Rades. Bei einem Beschleunigungsgeber macht sich eine Verringerung des Reifenluftdrucks durch eine Abnahme hoher Schwingungsfrequenzen bzw. eine Verkleinerung der Schwingungsamplituden der Aufhängungsteile bemerkbar. Bei einem Abstandsgeber hingegen zeigt sich eine derartige Verringerung des Reifenluftdrucks durch eine zunehmende Verkleinerung des statischen bzw. dynamischen Abstands der Aufhängungsteile.

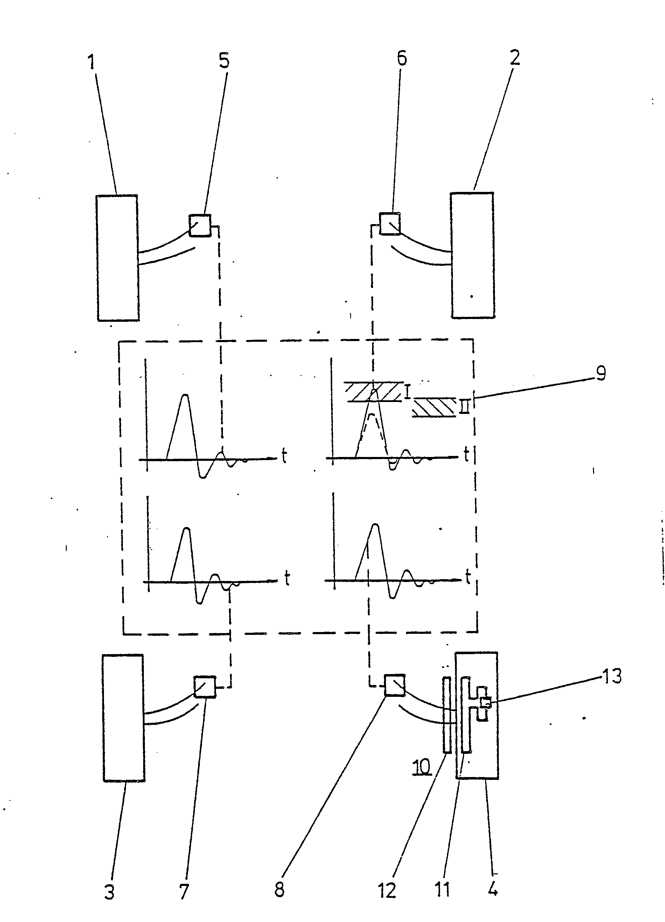

Ein Ausführungsbeispiel der Erfindung ist in der Zeichnung dargestellt und im folgenden erläutert.

Eine schematisch dargestellte Prüfvorrichtung für den Reifenluftdruck von Rädern an Fahrzeugen enthält für die beiden Vorderräder 1 und 2 und die beiden Hinterräder 3 und 4 je einen Beschleunigungsgeber 5 bis 8, der außerhalb des Radbereichs an den Aufhängungsteilen der Räder sitzt. Die Beschleunigungsgeber 5 bis 8 liefern beispielsweise bei überfahen einer Fahrbahnunebenheit Ausgangssignale an eine Vergleichseinrichtung 9, die im wesentlichen die gleiche Form besitzen. Abgesehen von der von der Geschwindigkeit des Fahrzeugs abhängigen Phasenverschiebung der Ausgangssignale für die beiden Vorderräder 5 und 6 bzw. die Hinterräder 7 und 8 ist die Form dieser Ausgangssignale von verschiedenen Faktoren abhängig. Dies sind u.a. die Belastung der Räder infolge Beladung, Längs- und Querbeschleunigung des Fahrzeugs sowie äußere Einflüsse, wie Umgebungstemperatur und Wärmeeinwirkung und schließlich am wichtigsten der Reifenluftdruck.

Durch Vergleich der Ausgangssignale der Räder einer Achse und einer Fahrzeugseite lassen sich alle diese Faktoren bis auf den Reifenluftdruck weitgehend eliminieren. Da sich jedoch mit Hilfe dieses Vergleichs der Reifenluftdruck eines oder aller Reifen nicht bestimmen läßt, ist an einem der Räder, im dargestellten Fall dem Hinterrad 8, eine Eicheinrichtung 10 angeordnet, mit der der Reifenluftdruck für dieses Rad exakt bestimmt werden kann. Die Eicheinrichtung besteht beispielsweise aus zwei konzentrischen Spulen 11 und 12, von denen die eine Spule 11 am Fahrzeugrad und konzentrisch zu dessen Achse und die andere Spule 12 hierzu eng benachbart an einem Aufhängungsteil des Rades 4 angeordnet ist. Die Spule 11 besitzt beispielsweise eine Induktivität, die vom Reifenluftdruck abhängig ist. Hierzu dient beispielsweise ein Reifenluftdruckgeber 13, der auf die Induktivität der Spule 11 Ein-fluß nimmt. Mit Hilfe der Spulen 11 und 12 läßt sich, wie beispielsweise in der Patentanmeldung P 30 29 563 im einzelnen dargestellt ist, Energie auf einen Schwingkreis mit der Spule 11 übertragen und ein vom Reifenluftdruck abhängiges Signal auf die Spule 12 zurückübertragen.

Mit Hilfe der Eicheinrichtung 10 ist es möglich, ein vom tatsächlichen Wert des Reifenluftdrucks des Rades 4 abhängiges Maß für die Ausgangssignale der Beschleunigungsgeber 5 bis 8 zu bestimmen, über dem eine Änderung eines dieser Ausgangssignale zur Auslösung eines Warnsignals führt und auf einen Druckverlust bzw. eine anomale Luftdruckänderung hinweist.

Anhand des wiedergegebenen Diagramms mit den Ausgangssignalen der Beschleunigungsgeber 5 bis 8 sei dies näher erläutert. Das Diagramm zeigt die bereits hinsichtlich der Einflüsse der o. g. Faktoren bereinigten Ausgangssignale. Diese Ausgangssignale stellen das Schwingungsverhalten der Aufhängungsteile bei überfahren einer Fahrbahnunebenheit dar. Verliert einer der vier Reifen Luft, so ändert sich das Ausgangssignal des Beschleunigungsgebers 6 in erster Linie dahingehend, daß die Schwingungsamplituden kleiner werden. Dies ist im Diagramm für das Ausgangssignal des Beschleunigungsgebers 6 strichliert dargestellt. Aus dieser Verringerung der Amplitude allein läßt sich jedoch nicht ohne weiteres herleiten, ob der Druckverlust tatsächlich ein gravierendes Maß erreicht hat. Der Grund hierfür ist neben der in der Regel nicht vollständigen Eliminierung der fahrzeug- und umgebungsbedingten Faktoren u. a. darin zu sehen, daß die Auswirkungen von Fahrbahnunebenheiten auf die Beschleunigungsgeber vom Wert des Reifenluftdrucks abhängig sind. Bei kleinerem Reifenluftdruck liefern größere Fahrbahnunebenheiten näherungsweise dieselben Beschleunigungsamplituden wie größere Fahrbahnunebenheiten bei kleinerem Reifenluftdruck.

Zwar könnten diese Einflüsse durch eine aufwendige Analyse der gesamten Ausgangssignale der Beschleunigungsgeber 5 bis 8 u. U. eliminiert werden. Einfacher demgegenüber ist es mit Hilfe der Eicheinrichtung 10 möglich, lediglich aus der Änderung der Maximalamplitude des Ausgangssignals auf einen unzulässigen Druckverlust des Reifens zu schließen. Aus dem mit Hilfe der Eicheinrichtung 10 bestimmten Reifenluftdruck für das Rad U läßt sich für jeden Beschleunigungsgeber 5 bis 8 ein Grenzwert der Maximalamplitude bestimmen, unter dem ein Druckverlust kritisch ist. Die Bandbreite ist vom Reifenluftdruck des Rades 4 abhängig und im Diagramm für relativ hohe (I) bzw. niedere Werte (II) dieses Druckes dargestellt.

Die Erfindung zeigt somit eine Prüfvorrichtung für den Reifenluftdruck von Rädern an Fahrzeugrädern, die einbaugünstig, preiswert und unempfindlich ist und bis auf eine Ausnahme keinen Eingriff an Rädern und Brems- bzw. Aufhängungsteilen erfordert. Ein Verfahren, nach dem die Vorrichtung arbeitet, ist ausführlich für Beschleunigungsgeber als Prüfeinrichtungen erläutert. Diese Erläuterungen sind ohne weiteres auf andere Ausführungen der Prüfeinrichtungen beispielsweise in Form von Abstandsgeber übertragbar. In jedem Fall läßt sich die Vorrichtung mit einfachen handelsüblichen elektronischen Bauteilen realisieren.

**Patentansprüche:**

1. Prüfvorrichtung für den Reifenluftdruck von Rädern an Fahrzeugen, mit individuellen Prüfeinrichtungen für jedes Rad, dadurch gekennzeihnet, dass die Prüfeinrichtungen (5 bis 8) außerhalb der Räder (1 bis 4) an deren Aufhängungsteilen angeordnet sind, daß lediglich ein einziges Rad (4) mit einer zusätzlichen Eicheinrichtung versehen ist, und daß die Prüfeinrichtungen eine Vergleichseinrichtung aufweisen, die die den jeweiligen Rädern zugeordneten Ausgangssignale miteinander und mit dem gemessenen Reifenluftdruckwert vergleicht.

2. Prüfvorrichtung nach Anspruch 1, dadurch gekennzeichnet, daß die Eicheinrichtung an einem Hinterrad (4) sitzt.

3. Prüfvorrichtung nach Anspruch 1 oder 2, dadurch gekennzeichnet, daß die Prüfeinrichtungen Beschleunigungsgeber (5 bis 8) sind.

4. Prüfvorrichtung nach Anspruch 1 oder 2, dadurch gekennzeichnet, daß die Prüfeinrichtungen Abstandsgeber für den Abstand der Aufhängungsteile von der Fahrbahnober fläche sind.

**Claims**

1. Testing apparatus for the tyre air pressure of wheels on vehicles, with individual testing devices for each wheel, characterised in that the testing devices (5 to 8) are arranged outside the wheels (1 to 4) on their suspension parts, in that only one single wheel (4) is provided with an additional calibration device (10) for the determination of the one tyre air pressure value, and in that the testing devices comprise a comparator device which compares the output signals allocated to the respective wheels with one another and with the measured tyre air pressure value.

2. Testing apparatus according to Claim 1, characterised in that the calibration device is seated on a rear wheel (4).

3. Testing apparatus according to Claim 1 or 2, characterised in that the testing devices are acceleration pick-ups (5 to 8).

4. Testing apparatus according to Claim 1 or 2, characterised in that the testing devices are distance indicators for the distance of the suspension parts from the roadway surface.

**Revendications**

1°) Appareil pour le contrôle de la pression d'air des pneumatiques de roues de véhicules, avec des dispositifs de contrôle individuels pour chaque roue, caractérisé par le fait que les dispositifs de contrôle (5 à 8) à l'extérieur des roues (1 à 4) sont disposés sur les éléments de suspension de celles-ci, qu'une seule roue (4) est pourvue d'un dispositif de calibrage supplémentaire pour l'établissement d'une valeur de la pression d'air des pneumatiques, et que les dispositifs de contrôle présentent un dispositif comparateur qui compare les signaux de sortie, affectés à chaque roue respective, entre eux et avec la valeur de la pression d'air des pneumatiques mesurée.

2°) Appareil de contrôle selon la revendication 1, caractérisé en ce que le dispositif de calibrage est placé sur une roue arrière (4).

3°) Appareil de contrôle selon l'une quelconque des revendications 1 et 2, caractérisé en ce que les dispositifs de contrôle sont des capteurs d'accélération (5 à 8).

4°) Appareil de contrôle selon l'une quelconque des revendications 1 et 2, caractérisé en ce que les dispositifs de contrôle sont des capteurs de distance détectant la distance entre les éléments de suspension et la surface de la chaussée.

0 083 771

1/1